# EUROPÄISCHE PATENTSCHRIFT

(11) **EP 3 445 148 B1**
(45) Veröffentlichungstag und Bekanntmachung des Hinweises auf die Patenterteilung: **20.05.2020**
(21) Anmeldenummer: 17717105.5
(22) Anmeldetag: 04.04.2017
(51) Int. Cl.: A01C 1/06, A01C 7/04, A01C 7/10

(54) **EINZELKORNSÄMASCHINE**
SINGLE GRAIN SEEDER
SEMEUSE MONO-GRAINE

(30) Priorität: 22.04.2016 EP 16166525
(43) Veröffentlichungstag der Anmeldung: 27.02.2019
(73) Patentinhaber: Bayer CropScience AG, 40789 Monheim am Rhein (DE)
(72) Erfinder: SCHNIER, Heinz-Friedrich, 51373 Leverkusen (DE); CONZEN, Carsten, 51375 Leverkusen (DE); MOREIRA PÖLKING, Livia, 40595 Düsseldorf (DE)
(74) Vertreter: Wagner Albiger & Partner Patentanwälte mbB
(86) Internationale Anmeldenummer: PCT/EP2017/057952
(87) Internationale Veröffentlichungsnummer: WO 2017/182261

(56) Entgegenhaltungen:
- WO-A1-97/24918
- WO-A1-2008/155235
- CA-A1- 2 644 958
- DE-A1- 3 333 435
- US-A- 4 356 934
- US-A1- 2016 073 576

## Beschreibung

Die vorliegende Erfindung betrifft eine Einzelkornsämaschine zum Einbringen von Körnern in einen Boden, umfassend ein Vereinzelungsorgan, welches geeignet ist, aus einem Vorratsbehälter zugeführte Körner zu vereinzeln und einzeln abzugeben. Die Erfindung betrifft weiterhin ein Verfahren zum Einbringen von Körnern in einen Boden unter Verwendung einer erfindungsgemäßen Einzelkornsämaschine.

Einzelkornsämaschinen werden in der Landwirtschaft zum Einbringen von Saatgut in den Boden eingesetzt. Sie weisen kleine Säschare oder Pflugschare auf, welche mehrere Zentimeter tiefe Rinnen in den Ackerboden ziehen. Samenkörner, die in einem Vorratsbehälter vorgehalten und dem Vereinzelungsorgan zugeführt werden, werden einzeln in diesen Rinnen oder Furchen abgelegt. Anschließend werden die Furchen durch ein nachlaufendes Zuschüttmittel, beispielsweise durch einen sogenannten Striegel, wieder geschlossen. Der Vorteil dieser landwirtschaftlichen Maschinen zur Aussaat von Pflanzensamen liegt in der genauen und gleichmäßigen Tiefenablage des Saatgutes, was gegenüber der Breitsaat, bei welcher die Samenkörner auf der gesamten Ackerfläche breitwürfig oder zufällig verteilt werden, zu weniger Vogelfraß und zu einem gleichmäßigeren Feldaufgang führt.

Zur Unterstützung des Pflanzenwachstums ist in der Landwirtschaft der Einsatz von Pflanzenschutzmitteln in Form von chemischen oder biologischen Substanzen gängige Praxis. Hierbei handelt es sich vor allem um Insektizide zum Schutz vor saugenden und fressenden Insekten und um Fungizide zum Schutz vor pilzlichen Erregern. Die Applikation dieser Pflanzenschutzmittel auf dem Feld erfolgt häufig durch Spritzen. Hierdurch kann jedoch nur die bereits angewachsene Jungpflanze erreicht werden, wodurch gewisse bereits im Anfangsstadium des Wachstums auftretende Pflanzenkrankheiten oder ein Insektenschädling, der die aufkeimenden Setzlinge angreift, nicht effizient behandelt werden können. Eine andere Möglichkeit der Applikation besteht in der Ablage von Mikrogranulaten in der Saatfurche. Eine punktgenaue Platzierung des Pflanzenschutzmittels ist hier nicht möglich, da stets die gesamte Saatfurche einschließlich der Zwischenräume zwischen den Saatkörnern behandelt wird. Dies führt zu einem unnötig hohen Schutzmittelverbrauch.

Zum Schutz des Saatgutes und des Keimlings vor Pilzen, Bakterien und Insekten ist es heute daher bereits üblich, dass das Saatgut zentral bei den Saatgutproduzenten mit sogenannten Beizmitteln behandelt wird. Dabei wird der jeweilige Wirkstoff bzw. eine Wirkstoffkombination in Form einer Beschichtung unmittelbar auf jedes einzelne Saatkorn aufgebracht. Neben den eigentlichen Wirkstoffen mit fungizider und/oder insektizider Wirkung beinhaltet das Beizmittel darüber hinaus im allgemeinen Haftmittel zur Verbesserung der Haftung der Wirkstoffe auf dem Saatkorn sowie Dispersionsmittel und Farbstoffe. Da durch das Beizen jedem Saatkorn bzw. jeder Pflanze das erforderliche Pflanzenschutzmittel in richtiger Dosierung und an Ort und Stelle zugeführt wird, reicht gegenüber einer Spritzanwendung eine relativ geringe Wirkstoffmenge aus, um den Keimling bzw. die Pflanze effektiv zu schützen. Auch unter Umweltschutzaspekten ist dieses Verfahren daher grundsätzlich vorteilhaft.

Bei der Handhabung des solchermaßen beschichteten Saatgutes durch den Landwirt kommt es jedoch während des Säprozesses aufgrund von mechanischen Belastungen in der Sämaschine zu einem unvermeidlichen partiellen Abrieb des aufgetragenen Pflanzenschutzmittels, wodurch ein mit Wirkstoffen kontaminierter feiner Beizmittelstaub entsteht.

Insbesondere bei den heute gebräuchlichen pneumatisch arbeitenden Einzelkornsämaschinen, bei denen zum kontrollierten Einbringen des Saatgutes in den Boden ein Vereinzelungsorgan mit einem Unter- oder Überdruck beaufschlagbar ist, wird dieser feine Beizmittelstaub durch den Luftstrom eines Gebläses aufgewirbelt und verteilt. Der feine Beizmittelstaub kann sich dabei in der Sämaschine anlagern, was die Funktionsfähigkeit der Anlage einschränken und eine mögliche Gefahr für die Bedienperson der Anlage darstellen kann. Besonders problematisch ist aber das mehr oder weniger unkontrollierte Entweichen des Beizmittelstaubs aus der Sämaschine in die Umgebung, was eine Gefahr für Menschen und Tiere, insbesondere für Insekten, darstellen kann. So ist beispielsweise Clothianidin einer von vielen in verschiedenen Pflanzenschutzmitteln und in Beizmitteln eingesetzten Wirkstoffen, von denen einige, insbesondere dann, wenn sie in Form des vorgenannten Beizmittelstaubs in die Umwelt gelangen, unter Verdacht stehen, möglicherweise toxisch für bestäubende Insekten zu sein, die zu den Nützlingen zählen.

Die Nachteile im Zusammenhang mit der Emission von Beizmittelstaub wurden bereits in der DE 20 2012 101 029 U1 thematisiert, die eine Sämaschine mit einem Staubabscheider vorschlägt, durch welchen beim Säprozess angesaugte und Staubpartikel enthaltende Luft in eine Luftkomponente und in eine Staubkomponente zerlegbar ist, wobei nachfolgend die von der Luftkomponente getrennte Staubkomponente mithilfe spezieller Einbringmittel in den Boden eingebracht werden kann.

Die DE 33 33 435 A1 offenbart eine mit einer Beizanordnung versehene Sämaschine, welche einen Saatgutbehälter, eine Anordnung zum Beizen von Saatgut, eine Anordnung für die Dosierung von aus dem Saatgutbehälter abgegebenem Saatgut und unter dem Saatgutbehälter angeordnete Saatleitungen und Scharen umfasst, und welche sich dadurch auszeichnet, dass die Beizanordnung zwischen der Dosieranordnung für Saatgut und den Scharen liegt. Auf diese Weise kann erreicht werden, dass nur das Saatgut gebeizt wird, welches den Saatgutbehälter durch die Dosieranordnung verlassen hat, so dass nach der Saat kein gebeiztes Saatgut im Saatgutbehälter zurückbleibt. Auf dem Weg der gebeizten Saatkörner durch die Saatleitungen kann es jedoch auch hier zu einem partiellen Abrieb von Beizmittel kommen, so dass nach wie vor Partikelstäube in die Umgebung gelangen können.

US 2016/073576 A1 offenbart eine dem Oberbegriff des Anspruchs 1 entsprechende Einzelkornsämaschine.

Die Aufgabe der vorliegenden Erfindung besteht darin, eine Einzelkornsämaschine bereitzustellen, mithilfe derer bereits die Entstehung von Partikelstaub verhindert, zumindest aber deutlich vermindert werden kann. Die Aufgabe besteht darüber hinaus in der Angabe eines Verfahrens zum Einbringen von Körnern in einen Boden, durch welches die Entstehung von Partikelstaub weitestgehend verhindert wird.

Diese Aufgabe wird gelöst durch eine Einzelkornsämaschine mit den Merkmalen des Patentanspruchs 1 sowie durch ein Verfahren zum Einbringen von Körnern in einen Boden gemäß Patentanspruch 9. Ausgestaltungen und Weiterbildungen der Erfindung sind Gegenstand der Unteransprüche.

Die erfindungsgemäße Einzelkornsämaschine zeichnet sich dadurch aus, dass sie eine Applikationseinheit zur Applikation eines Beizmittels auf ein vereinzeltes Korn umfasst, wobei die Applikationseinheit bezüglich des Vereinzelungsorgans derart angeordnet ist, dass die Applikation des Beizmittels auf ein Korn nach erfolgter Vereinzelung dieses Korn und vor der Abgabe dieses Korn aus dem Vereinzelungsorgan erfolgt.

Mit anderen Worten sieht die Erfindung vor, dass die zu vereinzelnden Körner nicht bereits vorab mit Beizmittel versehen sind und dann aus einem Vorratsbehälter dem Vereinzelungsorgan zugeführt werden, sondern erst nach erfolgter Vereinzelung durch das Vereinzelungsorgan individuell mit Beizmittel behandelt werden, bevor sie dann einzeln aus dem Vereinzelungsorgan abgegeben werden, zum Beispiel unmittelbar in eine Saatfurche. Zu diesem Zweck weist die erfindungsgemäße Einzelkornsämaschine eine Applikationseinheit zur Applikation eines Beizmittels auf, welche geeignet ist, die Körner einzeln mit Beizmittel zu versehen. Die Applikationseinheit ist dabei bezüglich des Vereinzelungsorgans so angeordnet, dass die Körner bereits durch das Vereinzelungsorgan vereinzelt wurden, bevor die Applikationseinheit das Beizmittel auf jedes einzelne Korn appliziert. Die Applikation von Beizmittel erfolgt somit nach erfolgter Vereinzelung und vor der Abgabe des jeweiligen Korns aus dem Vereinzelungsorgan. Bei herkömmlichen Sämaschinen, in welchen bereits vorab mit Beizmittel versehene Körner stets einer mechanischen Belastung durch Reibung aneinander oder an den Wandungen der Sämaschine ausgesetzt sind, ist ein gewisser Abrieb des trockenen Beizmittelbelags in Form von feinsten Staubpartikeln unvermeidlich. Diese Bildung von Beizmittelstaub wird durch die erfindungsgemäße Einzelkornsämaschine weitestgehend bis vollständig vermieden.

Erfindungsgemäß handelt es sich bei der Einzelkornsämaschine um eine pneumatische Einzelkornsämaschine, bei welcher das Vereinzelungsorgan als eine mit einem Unterdruck oder mit einem Überdruck beaufschlagbare rotierende Lochscheibe ausgebildet ist. Derartige auch als Säscheiben oder Saatgutscheiben bezeichnete Lochscheiben sind am Außenrand mit kleinen Löchern oder Vertiefungen ausgestattet, wobei durch die Wahl der Lochgröße, des Lochabstands und der Rotationsgeschwindigkeit eine optimale Anpassung an unterschiedliche Saatkorngrößen und Saatbedingungen erreicht und die Aussaatstärke (Körner pro Meter) variiert werden kann.

Auf der einen Seite der Lochscheibe kann beispielsweise ein Unterdruck anliegen, wodurch Saatkörner auf der anderen Seite der Lochscheibe aus einem Vorratsbehälter heraus aufgenommen werden. Die Löcher müssen dabei so dimensioniert sein, dass die Saatkörner, beispielsweise Maiskörner, zwar an den Löchern haften bleiben, nicht jedoch durch die Löcher hindurchtreten können. Jeweils ein Saatkorn haftet somit vermittels des anliegenden Unterdrucks im Bereich eines Lochs an der Scheibe an. Bei Rotation der Scheibe durchläuft jedes solchermaßen vereinzelte Korn erfindungsgemäß einen Applikationsbereich, in dem die Applikationseinheit angeordnet ist und in dem eine Applikation von Beizmittel auf dieses Korn erfolgt. Nachfolgend durchläuft das behandelte Korn ein schmales Kreissegment, in dem der an der Säscheibe anliegende Unterdruck abrupt zusammenbricht. Das mit Beizmittel behandelte Saatkorn fällt sodann von der Lochscheibe ab und fällt auf den Boden bzw. in eine zuvor gezogene Furche. Zusätzlich kann ein Abstreifer an der Lochscheibe vorgesehen sein, durch welchen das Saatkorn sicher von der Lochscheibe abgestreift wird. Auf diese Weise ist ein vereinzeltes Einbringen oder Einsetzen der gebeizten Saatkörner in den Boden sehr genau möglich, wobei die Entstehung von Beizmittelstaub im Wesentlichen vollständig verhindert werden kann, da die Beizung erst auf der Säscheibe und unmittelbar vor der Ablage des Korns im Boden erfolgt. Dadurch wirkt auf die vereinzelten und gebeizten Körner keinerlei mechanischer Stress mehr ein. Das Ablegen des behandelten Korns im Boden kann typischerweise innerhalb von 5 bis 20 ms, vorzugsweise innerhalb von 10 ms nach der Beizmittelapplikation erfolgen. Innerhalb eines solchen Zeitintervalls ist der Beizmittelauftrag im Allgemeinen noch nicht vollständig abgetrocknet, was einem staubfreien Ablegen des gebeizten Korns weiter förderlich ist.

In einer weiteren Ausführung der Erfindung umfasst die Applikationseinheit eine Düse zur exakten Dosierung des Beizmittels, welches dann in flüssiger Form oder gelförmig appliziert wird. Die Düse ist dabei so ausgestaltet, dass sie pro Applikationsvorgang einen im Wesentlichen tropfenförmigen Auftrag des Beizmittels auf ein jeweiliges Korn erlaubt. Unter einem im Wesentlichen tropfenförmigen Auftrag ist dabei ein Beizmittelauftrag zu verstehen, welcher das Korn nicht vollständig umhüllt, sondern nur einen Teil der Kornoberfläche bedeckt. Das Beizmittel ist dabei zweckmäßig so ausgelegt, dass es ohne Spritzverluste als Tropfen auf dem Korn haftet und trocknet, ohne dass es dabei seine Haftung verliert.

Eine derartige Düse kann beispielsweise als pneumatisch angetriebenes Ventil ausgebildet sein. So können Ventile für berührungslose Mikrodosierung Verwendung finden, die in Ruhestellung geschlossen sind und durch elektropneumatischen Antrieb mit Öffnungszeiten von weniger als 1 ms geschaltet werden können. Derartige Ventile weisen im Allgemeinen hohe Dosierfrequenzen und sehr hohe Dosiergenauigkeiten auf, wodurch ein extrem präziser und reproduzierbarer Dosiervorgang gewährleistet wird.

Gemäß einer weiteren Ausgestaltung der Erfindung umfasst die Applikationseinheit einen Sensor zur Erfassung eines vereinzelten Korns und/oder dessen Lage, wobei die Applikation des Beizmittels auf ein Korn durch ein Signal des Sensors triggerbar ist. Durch einen solchen Sensor kann sichergestellt werden, dass die Düse nur dann Beizmittel appliziert, wenn der Sensor ein vereinzeltes Korn detektiert und ein entsprechendes Signal an die Düse gibt. Auf diese Weise kann auch auf unterschiedliche Rotationsgeschwindigkeiten einer Säscheibe reagiert werden, derart, dass bei höherer Rotationsgeschwindigkeit mehr Körner pro Zeiteinheit von dem Sensor erfasst werden und durch ein entsprechendes Signal an die Düse eine höhere Dosierfrequenz der Düse bewirkt wird. Der Sensor sorgt somit für eine Synchronisation der Beizmittelapplikation sowie für ein punktgenaues Aufbringen des Beizmittels auf ein Korn.

Es kann erfindungsgemäß vorgesehen sein, dass die Applikation des Beizmittels berührungslos erfolgt, wobei die Düse vorzugsweise einen Abstand von 2 bis 10 mm von der Oberfläche des zu behandelnden Korns aufweist.

Gemäß einer Ausgestaltung der Erfindung sind mit der Düse Beizmittelmengen zwischen 0,3 und 5 µl pro zu behandelndem Korn dosierbar. Durch eine solche Menge an Beizmittel wird in der Regel eine ausreichende Versorgung des zu behandelnden Korns mit Wirkstoffen gewährleistet. In Abhängigkeit von der Viskosität des verwendeten Beizmittels und der Oberflächenstruktur des zu behandelnden Korns sind dadurch Tropfengrößen zwischen etwa 0,3 und 5 mm auf dem Korn erzeugbar.

Die Düse kann vorzugsweise als eine hochfrequente Düse ausgebildet sein, mit welcher Dosierfrequenzen im Bereich von 20 bis 100 Hz realisierbar sind, das heißt, die Düse kann pro Sekunde 20 bis 100 Applikationen vornehmen. Die tatsächliche Dosierfrequenz richtet sich nach der Ausgestaltung und Vereinzelungsgeschwindigkeit des Vereinzelungsorgans. Im Falle einer rotierenden Lochscheibe richtet sich die Dosierfrequenz nach der Anzahl der Löcher und nach der Rotationsgeschwindigkeit der Lochscheibe. Ein Sensor kann, wie oben bereits erwähnt, die konkreten Gegebenheiten erfassen und durch ein entsprechendes Signal an die Düse deren Dosierfrequenz synchronisieren.

Es kann erfindungsgemäß vorgesehen sein, dass das Beizmittel im Wesentlichen punktförmig auf das Korn appliziert wird. Der Auftrag des Beizmittels kann jedoch auch raupenförmig oder linienförmig erfolgen.

Die beschriebenen erfindungsgemäßen Einzelkornsämaschinen weisen gegenüber herkömmlichen Sämaschinen den Vorteil auf, dass die Entstehung und Emission eines die Umwelt belastenden Beizmittelstaubs vollständig oder zumindest im Wesentlichen verhindert werden kann, da die Beizung des Saatgutes erst auf der Sämaschine unmittelbar vor der Abgabe der Saatkörner aus der Maschine erfolgt.

Es sei an dieser Stelle darauf hingewiesen, dass eine ein Vereinzelungsorgan sowie eine Applikationseinheit gemäß der vorangehenden Beschreibung aufweisende Vorrichtung zur Vereinzelung von Körnern grundsätzlich auch in anderen Maschinen als in Einzelkornsämaschinen zum Einsatz kommen kann, dies aber nicht Gegenstand dieser Erfindung darstellt.

Grundsätzlich ist eine derartige Vereinzelungsvorrichtung zur Vereinzelung beliebiger Körner geeignet, die unmittelbar vor der Ausgabe aus der Vereinzelungsvorrichtung mit einem Beizmittelauftrag versehen werden sollen. Unter einem Beizmittel wird dabei im Zusammenhang mit der Erfindung nicht nur im engeren Sinne ein Pflanzenschutzmittel zur Behandlung von Saatgut verstanden, sondern im weiteren Sinne ein Mittel, welches zur Behandlung von Körnern oder granulatförmigen Stoffen geeignet ist und durch eine Applikationseinheit auf diese aufgebracht werden kann.

Schließlich betrifft die Erfindung auch ein Verfahren zum Einbringen von Körnern in einen Boden unter Verwendung einer erfindungsgemäßen Einzelkornsämaschine, umfassend die folgenden Schritte:
a) Zuführen der zu vereinzelnden Körner aus einem Vorratsbehälter in das Vereinzelungsorgan;
b) Vereinzeln der zugeführten Körner durch das Vereinzelungsorgan;
c) Applikation eines Beizmittels auf jeweils ein vereinzeltes Korn innerhalb des Vereinzelungsorgans;
d) Abgabe des vereinzelten und mit dem Beizmittel versehenden Korns aus dem Vereinzelungsorgan;
e) Einbringen des Korns in den Boden.

Durch ein solchermaßen ausgestaltetes Verfahren zum Einbringen von Körnern in einen Boden kann die Entstehung eines die Umwelt belastenden Beizmittelstaubs vollständig oder zumindest im Wesentlichen verhindert werden kann.

In einer Ausgestaltung der Erfindung kann das Verfahren so ausgestaltet sein, dass die Zeit zwischen den Verfahrensschritten c) und d) 5 bis 20 ms, vorzugsweise 10 ms beträgt. Mit anderen Worten erfolgt die Abgabe eines mit Beizmittel versehenen Korns aus dem Vereinzelungsorgan unmittelbar nach dem Beizmittelauftrag, so dass die Zeit für eine mögliche Wechselwirkung zwischen dem gebeizten Korn und dem Vereinzelungsorgan extrem kurz gehalten wird. Auf diese Weise kann ein Abrieb des Beizmittels im Wesentlichen vollständig unterbunden werden. Je nach verwendetem Beizmittel kann die Zeit zwischen den Verfahrensschritten c) und d) auch so bemessen sein, dass das Beizmittel bei Abgabe des behandelten Korns aus dem Vereinzelungsorgan noch nicht vollständig abgetrocknet ist, so dass eine Staubbildung weiter unterbunden wird und das Korn staubfrei im Boden abgelegt werden kann.

Es kann erfindungsgemäß auch vorgesehen sein, dass das Verfahren Zyklen vorsieht, in denen der Verfahrensschritt c) nicht ausgeführt wird und ein Korn nach seiner Vereinzelung in Schritt b) unmittelbar aus dem Vereinzelungsorgan abgegeben wird, ohne mit einem Beizmittel versehen zu sein. Ein derartiges, unterschiedliche Zyklen umfassendes Verfahren kann beispielsweise im Zusammenhang mit sogenanntem "Digital Farming" oder "Precision Farming" eine Rolle spielen. Hierunter werden Verfahren der ortsdifferenzierten Bewirtschaftung landwirtschaftlicher Nutzflächen verstanden, bei denen die Unterschiede des Bodens und der Ertragsfähigkeit innerhalb eines Feldes berücksichtigt werden. Hierfür werden digitale Karten sowie ein System zur Positionsbestimmung, in der Regel GPS, verwendet. Liegen für ein zu besäendes Feld ortsdifferenzierte Daten hinsichtlich der Bodenbeschaffenheit und des Schädlings- und/oder Unkrautaufkommens vor, so können diese Daten beim Ausbringen von Saatgut mit einer erfindungsgemäßen Sämaschine bzw. nach dem erfindungsgemäßen Verfahren berücksichtigt werden. Die Beizung des Saatguts unmittelbar vor der Abgabe aus dem Vereinzelungsorgan ermöglicht in diesem Fall eine bedarfsgerechte Beizung, d.h. es können Saatkörner nur für bestimmte Flächen innerhalb eines größeren Feldes gebeizt werden, während das Saatgut außerhalb dieser Flächen ungebeizt aus der Sämaschine ausgegeben wird. Auch die Menge des jeweiligen Beizmittelauftrags könnte grundsätzlich lokal differenziert gewählt und so an die Gegebenheiten angepasst werden. Durch eine derartige bedarfsgerechte Beizung kann der Verbrauch an Beizmittel reduziert werden, da das Beizmittel gezielt nur dort zum Einsatz kommt, wo es tatsächlich gebraucht wird. Außerdem wird eine mögliche Belastung der Umwelt durch den verringerten Beizmitteleinsatz ebenfalls reduziert. Es ist auch denkbar, eine erfindungsgemäße Einzelkornsämaschine mit mehreren unabhängig voneinander ansteuerbaren Applikationseinheiten auszurüsten, welche jeweils die Applikation unterschiedlicher Beizmittel einzeln oder in Kombination ermöglichen. Dadurch könnte noch individueller auf spezielle lokale Bodengegebenheiten reagiert werden. Zur Durchführung derartiger differenzierter Verfahren müssten die GPS-Daten der ausbringenden landwirtschaftlichen Maschine sowie die Informationen aus entsprechenden digitalen Karten in die Steuerung der Applikationsvorrichtung(en) eingespeist werden.

Zusammenfassend ermöglichen die vorgeschlagene Einzelkornsämaschine sowie das vorgeschlagene Verfahren zum Einbringen von Körnen in einen Boden unter Verwendung einer solchen Einzelkornsämaschine eine punktgenaue und gleichzeitig emissionsfreie Behandlung und Abgabe von Saatgut.

Im Folgenden wird die Erfindung anhand eines Ausführungsbeispiels und unter Bezugnahme auf die beigefügten Zeichnungen näher erläutert.

Es zeigen:
- Figur 1:: Eine erfindungsgemäße Einzelkornsämaschine in perspektivischer Ansicht;
- Figur 2:: Ein Detail aus Figur 1 in schematischer Seitenansicht;
- Figur 3:: Ein Vereinzelungsorgan in Form einer rotierenden Lochscheibe als Teil einer erfindungsgemäßen Einzelkornsämaschine;
- Figur 4:: Das Vereinzelungsorgan aus Figur 1 in Seitenansicht zusammen mit einer Applikationseinheit zur Applikation eines Beizmittels.

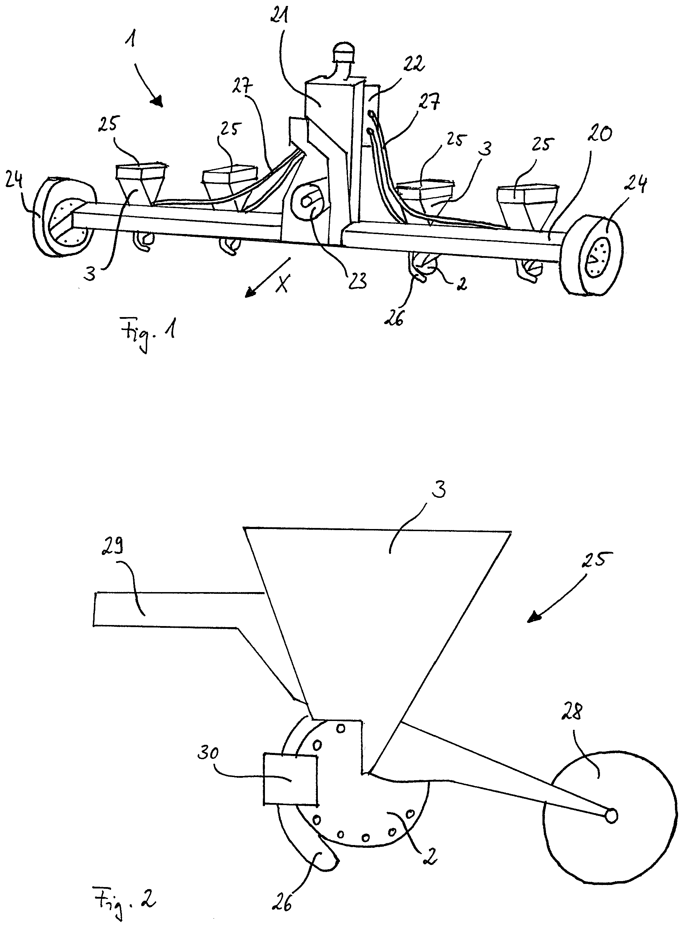

In Figur 1 ist eine im Ganzen mit 1 bezeichnete Einzelkornsämaschine dargestellt. Quer zur Fahrtrichtung X weist die Einzelkornsämaschine 1 einen Trägerrahmen 20 auf, der zentral einen Aufbau 21 zur Halterung eines Gebläses 22 umfasst. Über einen Anschluss 23 ist die Einzelkornsämaschine 1 an ein landwirtschaftliches Fahrzeug, beispielsweise einen Traktor, anschließbar. Der Trägerrahmen 20 weist an seinen beiden Enden Tragräder 24 auf.

Die Einzelkornsämaschine 1 ist als vierreihige Sämaschine ausgebildet. Entsprechend erkennt man in Figur 1 die vier Säeinheiten 25, welche jeweils einen Vorratsbehälter 3 für die Aufnahme von Saatgut aufweisen. Im unteren Bereich weist jede Säeinheit 25 ein Vereinzelungsorgan in Form einer rotierenden Lochscheibe 2 sowie ein der Lochscheibe 2 voranlaufendes Säschar 26 auf, welches eine Saatfurche in den Boden zieht. Druckluftleitungen 27 führen von dem zentralen Gebläse 22 zu den einzelnen Säeinheiten 25 und sorgen für die Ausbildung eines Vakuums auf einer Seite der Lochscheibe 2. Nicht zu erkennen sind in Figur 1 ein der Lochscheibe 2 nachgeordneter Striegel zum Verschließen der Saatfurche sowie eine dem Striegel nachgeordnete Andruckrolle 28. Ebenfalls in Figur 1 nicht zu erkennen ist die Applikationseinheit 30, welche anhand der Figuren 2 bis 4 im Folgenden näher erläutert werden wird.

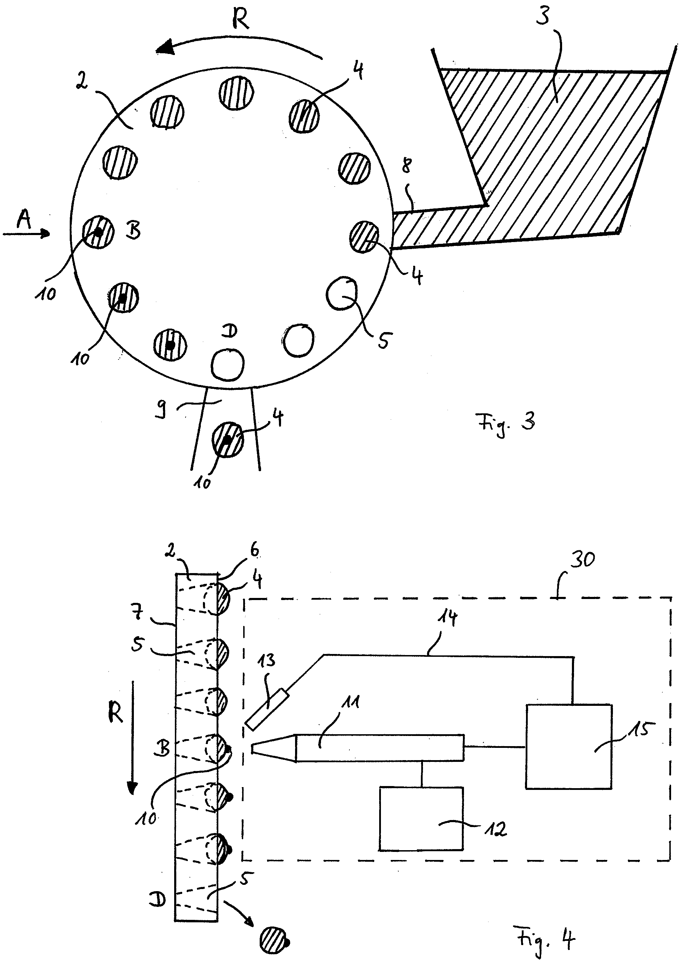

Figur 2 zeigt eine Säeinheit 25 aus Figur 1 in detaillierterer Seitenansicht. Die Säeinheit 25 ist über ein Verbindungselement 29 an den Trägerrahmen 20 der Einzelkornsämaschine 1 anschließbar. Saatgut, das in dem Vorratsbehälter 3 vorgehalten wird, gelangt in den Bereich der Lochscheibe 2 und wird dort, wie im Zusammenhang mit Figur 3 noch erläutert werden wird, vereinzelt sowie anschließend mit einem Beizmittelauftrag versehen. Die Lage der Applikationseinheit 30 zur Applikation des Beizmittels ist in Figur 2 schematisch angedeutet.

Anhand der Figuren 3 und 4 wird nun der Mechanismus der Vereinzelung der Saatkörner sowie der Beizung der vereinzelten Körner näher erläutert.
Aus Figur 3 ist ein als Lochscheibe 2 ausgebildetes Vereinzelungsorgan ersichtlich, welchem aus einem Vorratsbehälter 3 Körner 4 zugeführt werden. Bei den Körnern 4 handelt es sich um Saatkörner, beispielsweise Maiskörner. Die Lochscheibe 2 ist an ihrem Außenrand mit die Lochscheibe 2 durchdringenden Löchern 5 ausgestattet, welche sich, wie aus Figur 4 ersichtlich, innerhalb der Lochscheibe 2 von einer Vorderseite 6 zu einer Rückseite 7 hin konisch verjüngen. Der Durchmesser und die Ausgestaltung der Löcher 5 sind dabei so bemessen, dass Saatkörner 4 in den Löchern 5 aufgenommen werden, jedoch nicht durch sie hindurchtreten können.

Die Lochscheibe 2 ist auf ihrer in der Figur 3 dem Betrachter abgewandten Seite mit einem Unterdruck beaufschlagbar, so dass die aus dem Vorratsbehälter 3 zugeführten Saatkörner 4 aufgrund des anliegenden Druckgefälles im Bereich der Löcher 5 an die Lochscheibe 2 angesaugt werden. Die Lochscheibe 2 rotiert mit einer vorgegebenen Rotationsgeschwindigkeit in der durch den Pfeil R angedeuteten Rotationsrichtung. Auf diese Weise kann jedes die Vorratsbehälterzuführung 8 passierende Loch 5 ein Saatkorn 4 aus dem Vorrat aufnehmen. Auf diese Weise sorgt die Lochscheibe 2 für eine Vereinzelung der Saatkörner 4. Aufgrund des anliegenden Unterdrucks bewegen sich die in den Löchern 5 aufgenommenen Saatkörner 4 mit der Lochscheibe 2 mit, bis sie in einen kreissegmentförmigen Bereich 9 eintreten, in welchem der Unterdruck abrupt zusammenbricht und das Saatkorn 4 in einer Position D von der Lochscheibe 2 abfällt. Auf diese Weise lassen sich die Saatkörner in definierter und vereinzelter Weise beispielsweise in einer Saatfurche auf einem Ackerboden ablegen.

In einer Position B wird auf die Saatkörner 4 mittels einer in Figur 3 nicht dargestellten hochfrequenten Düse ein flüssiges oder gelförmiges Beizmittel appliziert. Das tropfenförmig auf die Körner 4 aufgetragene und daran haftende Beizmittel ist mit 10 bezeichnet.

Die Einzelheiten im Zusammenhang mit dem Beizmittelauftrag sind aus Figur 4 ersichtlich. Hier ist die Lochscheibe 2 aus Figur 3 in einer Seitenansicht aus Richtung des Pfeils A in Figur 3 dargestellt. Die die Lochscheibe 2 durchsetzenden, sich konisch verjüngenden Löcher 5 sind hier mit gestrichelten Linien gezeigt. Saatkörner 4 werden durch an der Rückseite 7 der Lochscheibe 2 anliegenden Unterdruck in den Löchern 5 an der Lochscheibe 2 fixiert und bewegen sich mit dieser. Der Lochscheibe 2 benachbart ist eine Applikationseinheit 30 angeordnet, welche eine hochfrequente Düse 11, einen Beizmittelvorrat 12, einen Sensor 13 sowie eine Steuerung 15 umfasst. Bei Durchlaufen einer Position B wird aus der hochfrequenten Düse 11 ein Beizmittel 10 auf jedes Korn 4 appliziert. Die Düse 11 ist zu diesem Zweck mit dem Beizmittelvorrat 12 verbunden, wobei es sich bei dem Beizmittel beispielsweise um ein Insektizid handelt.

Der Düse 11 ist darüber hinaus der Sensor 13 zugeordnet, welcher dazu bestimmt ist, ein vereinzeltes Korn 4 und dessen genaue Position zu erfassen. Der Sensor 13 ist über eine Verbindung 14 mit der Steuerung 15 der Düse 11 verbunden, so dass die Düse 11 durch ein Signal des Sensors 13 triggerbar ist. Mit anderen Worten liefert der Sensor 13 ein Signal an die Steuerung 15, sobald er ein Korn 4 in der Position B detektiert, woraufhin die Steuerung 15 die Düse 11 aktiviert und diese Beizmittel 10 auf das Korn 4 appliziert. Auf diese Weise wird sichergestellt, dass die Düse 11 nur dann Beizmittel 10 appliziert, wenn der Sensor 13 tatsächlich ein vereinzeltes Korn detektiert. Insbesondere kann auf diese Weise auf unterschiedliche Rotationsgeschwindigkeiten der Lochscheibe 2 reagiert werden, derart, dass bei höherer Rotationsgeschwindigkeit mehr Körner 4 pro Zeiteinheit von dem Sensor 13 erfasst werden und durch ein entsprechendes Signal an die Düse 11 eine höhere Dosierfrequenz der Düse 11 bewirkt werden kann.

Die Düse 11 ist etwa 5 mm beabstandet von der Oberfläche des Korns 4 positioniert und arbeitet berührungslos. Pro Applikationsvorgang appliziert sie etwa 0,5 µl Beizmittel 10 auf ein Korn 4, wodurch ein im Wesentlichen punktförmiger Beizmittelauftrag mit einem Durchmesser von weniger als 2 mm erreicht wird. Die Frequenz der Düse 11 kann beispielsweise so eingestellt sein, dass sie alle 33 ms eine Applikation vornimmt.

Die solchermaßen mit Beizmittel 10 versehenen Körner 4 laufen weiter mit der Lochscheibe 4 um, bis sie in einen oben schon im Zusammenhang mit Figur 3 erläuterten Bereich 9 eintreten, in welchem der Unterdruck abrupt zusammenbricht und die Körner 4 von der Lochscheibe 2 abfallen, wie dies im unteren Bereich der in Figur 4 dargestellten Lochscheibe 2 in der Position D zu sehen ist. Die Abgabe des Saatkorns 4 aus dem Vereinzelungsorgan in der Position D erfolgt innerhalb von 10 ms nach dem Beizmittelauftrag in der Position B. Dies hat zur Folge, dass das Beizmittel 10 auf dem Korn 4 noch nicht vollständig abgetrocknet ist, wodurch eine vollkommen staubfreie Ablage des gebeizten Korns 4 im Boden möglich ist.

Die Körner 4 werden somit zunächst vereinzelt, bevor sie einzeln mit einem Beizmittelauftrag versehen werden und kurz darauf aus dem Vereinzelungsorgan abgegeben und im Boden abgelegt werden. Die mit Beizmittel versehenen Körner 4 sind in einer derartigen Einzelkornsämaschine keinerlei mechanischem Stress ausgesetzt, wodurch die Entstehung eines Beizmittelstaubs effizient vermieden werden kann.

In dem in Figur 4 dargestellten Ausführungsbeispiel ist die Düse 11 so angeordnet, dass der Beizmittelauftrag im Wesentlichen in horizontaler Richtung zentral auf ein Korn 4 erfolgt. Die Düse kann bei anderen Ausführungen auch so angeordnet sein, dass der Beizmittelauftrag unter einem gewissen Winkel zur Horizontalen erfolgt.

## Patentansprüche

1. Einzelkornsämaschine zum Einbringen von Körnern (4) in einen Boden, umfassend ein Vereinzelungsorgan (2), welches geeignet ist, aus einem Vorratsbehälter (3) zugeführte Körner (4) zu vereinzeln und einzeln abzugeben, wobei das Vereinzelungsorgan (2) als eine mit einem Unterdruck oder mit einem Überdruck beaufschlagbare rotierende Lochscheibe ausgebildet ist und die Einzelkornsämaschine eine Applikationseinheit (30) zur Applikation eines Beizmittels (10) auf ein vereinzeltes Korn (4) umfasst, **dadurch gekennzeichnet, dass** die Applikationseinheit (30) bezüglich des Vereinzelungsorgans (2) derart angeordnet ist, dass die Applikation des Beizmittels (10) auf ein Korn (4) nach erfolgter Vereinzelung dieses Korns (4) und vor der Abgabe dieses Korns (4) aus dem Vereinzelungsorgan (2) erfolgt.

2. Einzelkornsämaschine nach Anspruch 1, **dadurch gekennzeichnet, dass** die Applikationseinheit (30) eine Düse (11) zur Dosierung des Beizmittels (10) umfasst.

3. Einzelkornsämaschine nach Anspruch 2, **dadurch gekennzeichnet, dass** die Düse (11) als pneumatisch angetriebenes Ventil ausgebildet ist.

4. Einzelkornsämaschine nach Anspruch 2 oder 3, **dadurch gekennzeichnet, dass** die Applikationseinheit (30) einen Sensor (13) zur Erfassung eines vereinzelten Korns (4) und/oder dessen Lage umfasst und dass die Applikation des Beizmittels (10) auf ein Korn (4) durch ein Signal des Sensors (13) triggerbar ist.

5. Einzelkornsämaschine nach einem der Ansprüche 2 bis 4, **dadurch gekennzeichnet, dass** die Applikation des Beizmittels (10) berührungslos erfolgt, wobei die Düse (11) einen Abstand von 2-10 mm von der Oberfläche des zu behandelnden Korns (4) aufweist.

6. Einzelkornsämaschine nach einem der Ansprüche 2 bis 5, **dadurch gekennzeichnet, dass** mit der Düse (11) Beizmittelmengen zwischen 0,3 und 5 µl pro zu behandelndem Korn (4) dosierbar sind.

7. Einzelkornsämaschine nach einem der Ansprüche 2 bis 6, **dadurch gekennzeichnet, dass** die Düse (11) eine Dosierfrequenz von 20 bis 100 Hz aufweist.

8. Einzelkornsämaschine nach einem der vorangehenden Ansprüche, **dadurch gekennzeichnet, dass** das Beizmittel (10) im Wesentlichen punktförmig auf das Korn (4) appliziert wird.

9. Verfahren zum Einbringen von Körnern (4) in einen Boden unter Verwendung einer Einzelkornsämaschine gemäß einem der Ansprüche 1 bis 8, umfassend die folgenden Schritte:
a) Zuführen der zu vereinzelnden Körner (4) aus einem Vorratsbehälter (3) in das Vereinzelungsorgan (2);
b) Vereinzeln der zugeführten Körner (4) durch das Vereinzelungsorgan (2);
c) Applikation eines Beizmittels (10) auf jeweils ein vereinzeltes Korn (4) innerhalb des Vereinzelungsorgans (2);
d) Abgabe des vereinzelten und mit dem Beizmittel (10) versehenen Korns (4) aus dem Vereinzelungsorgan (2);
e) Einbringen des Korns (4) in den Boden.

10. Verfahren nach Anspruch 9, wobei die Zeit zwischen den Verfahrensschritten c) und d) 5 bis 20 ms, vorzugsweise 10 ms beträgt.

11. Verfahren nach Anspruch 9 oder 10, wobei das Verfahren ferner Zyklen vorsehen kann, in denen der Verfahrensschritt c) nicht ausgeführt wird und ein Korn (4) nach seiner Vereinzelung in Schritt b) unmittelbar aus dem Vereinzelungsorgan (2) abgegeben wird, ohne mit einem Beizmittel (10) versehen zu sein.

## Claims

1. Single-grain seeder for introducing seeds (4) into soil, comprising a singulating member (2) which is suitable for singulating seeds (4) supplied from a storage container (3) and for dispensing said seeds individually,
wherein the singulating member (2) is configured as a rotating perforated disk which can be subjected to a negative pressure or to a positive pressure, and the single-grain seeder comprises an application unit (30) for applying a dressing agent (10) to a singulated seed (4), **characterised in that** the application unit (30) is arranged with respect to the singulating member (2) in such a manner that the dressing agent (10) is applied to a seed (4) after said seed (4) has been singulated and prior to said seed (4) being dispensed from the singulating member (2).

2. Single-grain seeder according to claim 1, **characterised in that** the application unit (30) comprises a nozzle (11) for dosing the dressing agent (10).

3. Single-grain seeder according to claim 2, **characterised in that** the nozzle (11) is configured as a pneumatically driven valve.

4. Single-grain seeder according to claim 2 or 3, **characterised in that** the application unit (30) comprises a sensor (13) for sensing a singulated seed (4) and/or the position thereof, and **in that** the application of the dressing agent (10) to a seed (4) can be triggered by a signal of the sensor (13).

5. Single-grain seeder according to any of claims 2 to 4, **characterised in that** the dressing agent (10) is applied contactlessly, wherein the nozzle (11) is at a distance of 2-10 mm from the surface of the seed (4) to be treated.

6. Single-grain seeder according to any of claims 2 to 5, **characterised in that** dressing agent quantities of between 0.3 and 5 µl per seed (4) to be treated can be dosed with the nozzle (11).

7. Single-grain seeder according to any of claims 2 to 6, **characterised in that** the nozzle (11) has a dosing frequency of 20 to 100 Hz.

8. Single-grain seeder according to any of the preceding claims, **characterised in that** the dressing agent (10) is applied in a substantially punctiform manner to the seed (4).

9. Method for introducing seeds (4) into soil using a single-grain seeder according to any of claims 1 to 8, comprising the following steps:
a) supplying the seeds (4) to be singulated from a storage container (3) to the singulating member (2);
b) singulating the supplied seeds (4) by means of the singulating member (2);
c) applying a dressing agent (10) to a respectively singulated seed (4) within the singulating member (2);
d) dispensing the singulated seed (4) which is provided with the dressing agent (10) from the singulating member (2);
e) introducing the seed (4) into the soil.

10. Method according to claim 9, wherein the time between method steps c) and d) is 5 to 20 ms, preferably 10 ms.

11. Method according to claim 9 or 10, wherein the method can further provide cycles in which method step c) is not carried out and a seed (4), after being singulated in step b), is dispensed directly from the singulating member (2) without being provided with a dressing agent (10).

## Revendications

1. Semoir monograine destiné à l'introduction de graines (4) dans un sol, comprenant un organe d'individualisation (2), lequel est conçu pour individualiser des graines (4) acheminées en provenance d'un réservoir (3) et les distribuer individuellement, l'organe d'individualisation (2) étant formé en tant qu'un disque perforé rotatif pouvant être mis en dépression ou en surpression et le semoir monograine comprenant une unité d'application (30) destinée à l'application d'un désinfectant (10) sur une graine (4) individuelle, **caractérisé en ce que** l'unité d'application (30) par rapport à l'organe individuelle (2) est disposée de sorte que l'application du désinfectant (10) sur une graine (4) s'effectue après la réussite de l'individualisation de cette graine (4) et avant la distribution de cette graine (4) en provenance de l'organe d'individualisation (2).

2. Semoir monograine selon la revendication 1, **caractérisé en ce que** l'unité d'application (30) comprend une buse (11) pour doser le désinfectant (10).

3. Semoir monograine selon la revendication 2, **caractérisé en ce que** la buse (11) est formée en tant que soupape entraînée de manière pneumatique.

4. Semoir monograine selon la revendication 2 ou 3, **caractérisé en ce que** l'unité d'application (30) comprend un capteur (13) destiné à la détection d'une graine individualisée (4) et/ou sa position et **en ce que** l'application du désinfectant (10) sur une graine (4) peut être déclenchée par un signal du capteur (13).

5. Semoir monograine selon l'une quelconque des revendications 2 à 4, **caractérisé en ce que** l'application du désinfectant (10) s'effectue sans contact, la buse (11) se trouvant à une distance de 2 à 10 mm de la surface de la graine (4) à traiter.

6. Semoir monograine selon l'une quelconque des revendications 2 à 5, **caractérisé en ce que** des quantités de désinfectant compris entre 0,3 et 5 µl par graine (4) à traiter peuvent être dosées grâce à la buse (11).

7. Semoir monograine selon l'une quelconque des revendications 2 à 6, **caractérisé en ce que** la buse (11) présente une fréquence de doses allant de 20 à 100 Hz.

8. Semoir monograine selon l'une quelconque des revendications précédentes, **caractérisé en ce que** le désinfectant (10) est appliqué sensiblement par points sur la graine (4).

9. Procédé destiné à l'introduction de graines (4) dans un sol en utilisant un semoir monograine selon l'une quelconque des revendications 1 à 8, comprenant les étapes suivantes consistant à :
a) acheminer les graines (4) à individualiser en provenance d'un réservoir (3) dans un organe d'individualisation (2) ;
b) individualiser les graines (4) acheminées grâce à l'organe d'individualisation (2) ;
c) appliquer un désinfectant (10) sur respectivement une graine (4) individualisée à l'intérieur de l'organe d'individualisation (2) ;
d) distribuer les graines (4) individualisées et pourvues du désinfectant (10) en provenance de l'organe d'individualisation (2) ;
e) introduire la graine (4) dans le sol.

10. Procédé selon la revendication 9, la durée entre les étapes de procédé c) et d) allant de 5 à 20 ms, de préférence 10 ms.

11. Procédé selon la revendication 9 ou 10, le procédé pouvant prévoir en outre des cycles, dans lesquels l'étape de procédé c) n'étant pas réalisée et une graine (4) étant distribuée immédiatement après son individualisation (2) à l'étape b) en provenance de l'organe d'individualisation, sans avoir été pourvue d'un désinfectant (10).
